# FASCICULE DE BREVET EUROPEEN

(11) **EP 0 902 199 B1**
(45) Date de publication et mention de la délivrance du brevet: **15.05.2002**
(21) Numéro de dépôt: 98402227.7
(22) Date de dépôt: 09.09.1998
(51) Int. Cl.: F16B 47/00

(54) **Dispositif pour la fixation d'un objet sur une surface, notamment sur un mur ou un plancher, à l'aide d'un mastic-colle**
Vorrichtung zum Fixieren eines Gegenstandes auf einer Oberfläche, insbesondere auf einer Wand oder einem Boden, anhand von klebendem Kitt
Device for fastening an object onto a surface, especially onto a wall or a floor, by means of adhesive mastic

(30) Priorité: 12.09.1997 FR 9711356
(43) Date de publication de la demande: 17.03.1999
(73) Titulaire: PARALUX SAS, 77140 Nemours (FR)
(72) Inventeur: Schell, Guy Léon Paul, 93160 Noisy Le Grand (FR)
(74) Mandataire: Lemoine, Robert

(56) Documents cités:
- CH-A- 233 139
- FR-A- 2 691 761
- US-A- 2 549 766
- US-A- 3 165 283

## Description

La présente invention concerne un dispositif pour la fixation d'un objet sur une surface, notamment sur un mur ou un plancher, comprenant premièrement une plaquette comportant des ailes faisant saillie sur sa face interne et destinées à être appliquées contre la surface, deuxièmement une quantité de colle destinée à fixer les ailes de la plaquette contre la surface, et troisièmement des moyens pour fixer l'objet sur la plaquette, les ailes ayant la même hauteur et définissant avec la face interne de la plaquette un logement apte à recevoir une quantité de colle suffisante pour assurer, après polymérisation, une fixation solide, sur la surface, de la plaquette portant l'objet.

Les objets tels que les accessoires de salle de bain sont généralement fixés à l'aide de vis. Ce mode de fixation, qui nécessite la réalisation de trous dans les murs pour permettre l'implantation des vis, n'est toutefois pas satisfaisant. En effet, lorsqu'un objet est enlevé, déplacé ou remplacé par un autre, les trous réalisés pour sa fixation deviennent apparents, ce qui affecte fortement l'aspect du mur.

Pour remédier à cet inconvénient, certains professionnels ont proposé de fixer les accessoires de salles de bain ou autres à l'aide d'une colle. L'expérience montre cependant que la fixation réalisée à l'aide de cette colle n'est pas très résistante et a tendance à se détériorer dans le temps.

FR-A-2 691 761 décrit un dispositif de fixation utilisable dans le bâtiment, en particulier pour fixer un revêtement étanche sur un plafond métallique.

Ce dispositif comporte une cavité délimitée par une plaquette et une garniture autoadhésive ayant la forme d'un cadre dont les dimensions externes correspondent à celles de la plaquette, la cavité étant destinée à être remplie de colle à partir d'un évent ménagé dans la plaquette.

US-A-2 549 766 constitue l'état antérieur de la technique le plus proche. Il décrit un dispositif de fixation ayant la structure indiquée au premier paragraphe ci-dessus et pouvant être installé sans qu'il soit nécessaire de réaliser des trous dans la surface destinée à le porter.

La plaquette et les ailes de ce dispositif forment un boîtier dont l'entrée est pourvue d'une grille. La réalisation d'un tel boîtier et toutefois complexe et coûteuse.

Par ailleurs, l'air contenu dans le boîtier peut difficilement s'échapper lors de l'introduction de la matière adhésive et rend difficile un remplissage complet du boîtier.

Le dispositif de fixation selon la présente invention remédie aux inconvénients décrits ci-dessus et est, à cet effet, caractérisé en ce que les ailes sont situées uniquement au niveau de deux côtés opposés de la plaquette, en ce que l'une des ailes possède une face interne perpendiculaire à la plaquette et une face externe inclinée en direction de sa face interne, et en ce que la colle est un mastic-colle thermodégradable.

Les essais réalisés pour mettre au point le dispositif conforme à l'invention ont montré de façon surprenante que la fixation de l'objet était particulièrement solide lorsque le mastic-colle appliqué contre la surface avait une épaisseur relativement importante.

C'est précisément pour que le mastic-colle utilisé forme une couche épaisse que l'élément support comporte le logement dans sa partie destinée à être appliquée contre la surface.

Le dispositif selon l'invention est particulièrement avantageux lorsque la plaquette est fixée contre un mur de telle sorte que son aile ayant la structure ci-dessus s'étende horizontalement, à une hauteur supérieure à celle de son autre aile.

Dans ce cas en effet, comme la face interne de l'aile décrite ici est perpendiculaire à la plaquette, l'effort d'arrachement qu'exerce l'objet sur cette dernière est beaucoup mieux réparti.

Par ailleurs, comme la face externe de l'aile décrite ici est inclinée vers la face interne, et donc vers le bas, il suffit de réaliser l'objet avec un évidement de forme complémentaire pour qu'il s'emboîte sur la plaquette et soit parfaitement retenu sur celle-ci, même avant l'utilisation des moyens de fixation.

Il est en outre souhaitable que l'autre aile possède une face interne perpendiculaire à la plaquette et une face externe dont les parties terminales sont parallèles à sa face interne et dont la partie intermédiaire est inclinée en direction de cette dernière.

Etant donné que la face interne de cette aile est également perpendiculaire à la plaquette, l'effort d'arrachement exercé par l'objet sur cette dernière est encore mieux réparti.

De préférence, la plaquette comporte au moins un trou dans sa partie située entre les ailes, la partie terminale du trou qui est située du côté de la face externe de la plaquette étant évasée.

Il n'est pas necessaire dans ce cas de déterminer avec précision la quantité de mastic-colle utilisée, le trou servant de réceptacle pour l'excès de mastic-colle.

Le mastic-colle qui remplit la partie évasée du trou constitue une sorte de rivet après polymérisation, ce qui améliore sa liaison avec la plaquette et augmente par conséquent la résistance de la fixation de la plaquette contre la surface.

De préférence, la face interne de la plaquette porte au moins un téton dont la longueur est inférieure ou égale à la hauteur des ailes.

Grâce à ce téton, il est en effet possible d'augmenter de façon notable la résistance au cisaillement et à l'arrachement de la plaquette.

La présente invention couvre également la combinaison du dispositif décrit ci-dessus et de l'objet destiné à être fixé à l'aide de ce dispositif, cet objet comportant sur sa face destinée à être appliquée contre la surface un logement dont le volume correspond au jeu de montage près à celui de la plaquette, tandis que les moyens de fixation comprennent au moins une vis-pointeau destinée à être vissée dans un trou taraudé ménagé dans l'objet et dont l'extrémité libre est destinée à prendre appui contre la plaquette.

De préférence, le trou taraudé est ménagé dans la partie de l'objet qui est destinée à venir devant la partie intermédiaire inclinée de la face externe de l'autre aile.

La vis-pointeau, en venant prendre appui contre la partie intermédiaire, assure non seulement la fixation de l'objet sur la plaquette mais presse également cette dernière contre la surface, ce qui permet une fixation encore plus solide de l'objet.

Un mode d'exécution de la présente invention sera décrit ci-après à titre d'exemple nullement limitatif en référence au dessin annexé, dans lequel :
- la figure 1 est une vue en perspective d'une plaquette conforme à l'invention, montrant la face externe de la plaquette ;
- la figure 2 est une vue en perspective de la plaquette visible sur la figure 1, montrant la face interne de ladite plaquette ;
- la figure 3 est une vue en coupe verticale de la plaquette, après fixation contre un mur ;
- la figure 4 est une vue en coupe verticale illustrant l'emboîtement d'un objet sur une plaquette fixée contre un mur ;
- la figure 5 est une vue analogue à la figure 4, mais montrant l'objet fixé sur la plaquette.

Le dispositif de fixation qui est représenté sur le dessin a été mis au point pour fixer un objet quelconque aussi bien sur un mur que sur un plancher. Il est toutefois plus particulièrement destiné à fixer des accessoires de salle de bain ou de cuisine car il ne nécessite par l'emploi de vis.

Il comprend tout d'abord une plaquette rectangulaire 1 comportant deux ailes 2,3 faisant saillie sur sa face 4, le long de ses deux côtés transversaux. Les ailes définissent ainsi avec la face 4 un logement 5.

L'aile 2 comporte une face interne 6 qui est perpendiculaire à la face 4 et une face externe 7 qui est inclinée en direction de sa face interne 6 et rejoint cette dernière le long d'une ligne droite 8.

L'aile 3 comporte quant à elle une face interne 9 perpendiculaire à la face 4 et une face externe 10 dont les parties terminales sont parallèles à la face interne 9, et dont la partie intermédiaire 11 est inclinée en direction de cette dernière et la rejoint le long d'une ligne droite 12.

On précisera ici que les ailes 2,3 ont la même hauteur et que le logement 5 a par conséquent une profondeur uniforme.

La plaquette 1 comporte quatre trous 13 dans sa partie située entre les ailes 2,3, ces trous étant évasés au niveau de leur partie terminale qui débouche sur la face 14 de la plaquette, du côté opposé à la face 4 de celle-ci.

La plaquette 1 comporte également un téton 15 faisant saillie sur sa face 4 et dont la longueur est au maximum égale à la hauteur des ailes 2,3.

Le dispositif de fixation comprend également une vis-pointeau 16 permettant de fixer fermement un objet 17 sur la plaquette.

Afin de fixer la plaquette sur une surface lisse ou non, notamment sur un mur ou un plancher, il convient d'utiliser un mastic-colle thermodégradable 18 connu en soi.

Lors des essais qu'il a effectués pour mettre au point le dispositif de fixation, l'auteur de la présente invention a constaté qu'il était préférable d'utiliser un mastic-colle de la famille des époxy, notamment le mastic-colle qui est commercialisé sous la marque QUICKSTEEL et dont la température de dégradation est de l'ordre de 120 à 140°C.

On précisera par ailleurs que la plaquette 1 peut être réalisée en un matériau quelconque, bien qu'il soit préférable qu'elle soit en métal ou en alliage.

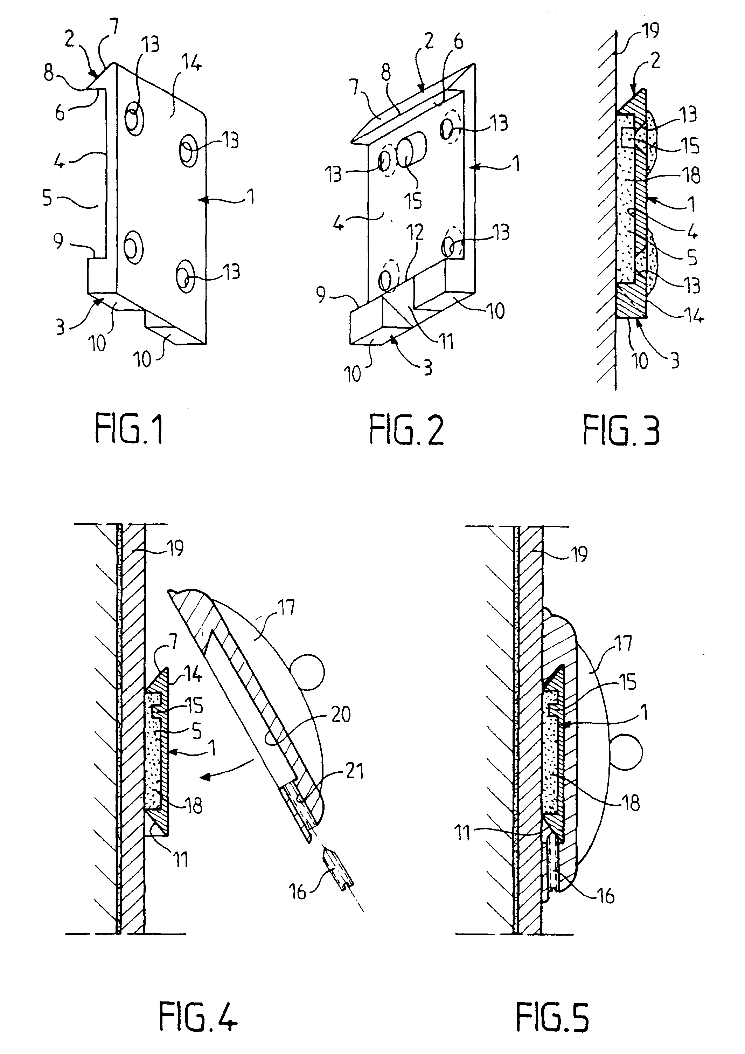

En ce qui concerne l'objet 17, il comporte sur sa face destinée à être appliquée contre le mur 19 représenté sur les figures 3 à 5, un logement 20 dont le volume correspond au jeu de montage près à celui de la plaquette 1 et du logement 5.

Il comporte également un trou taraudé 21 dans sa partie se trouvant devant la partie intermédiaire 11 de la face externe 10 de l'aile 3 lorsqu'il est en place sur la plaquette.

On va maintenant décrire les opérations qu'il convient de faire pour fixer l'objet 17 contre le mur 19.

Tout d'abord, on dégraisse la plaquette 1 et la partie du mur 19 contre laquelle on souhaite fixer cette dernière, par exemple à l'aide d'alcool à brûler.

On malaxe ensuite une quantité prédéterminée de mastic-colle afin de lui donner la consistance d'une pâte, après quoi on étale manuellement cette pâte dans le logement 5 délimité par les ailes 2,3 et la face 4 de la plaquette.

Il convient de veiller à ce que le volume de mastic-colle utilisé soit légèrement plus grand que le volume du logement 5 pour la raison qui apparaîtra clairement ci-après.

On applique ensuite les extrémités libres des ailes 2,3 contre le mur 19, à l'endroit voulu, de telle sorte que l'aile 2 s'étende horizontalement au-dessus de l'aile 3, comme représenté sur la figure 3.

Sous l'action de la pression exercée sur la plaquette le mastic-colle est alors contraint de se répartir uniformément dans le logement 5 et de remplir entièrement les trous 13 de la plaquette.

On élimine ensuite le mastic-colle en excès qui est hors du logement 5 et qui fait saillie sur la face externe 14 de la plaquette, cette étape étant généralement effectuée une minute après l'application de la plaquette contre le mur.

Après avoir attendu pendant environ une heure que la polymérisation du mastic-colle soit terminée, on met en place l'objet 17 sur la plaquette en l'inclinant comme représenté sur la figure 4 afin de pouvoir amener le côté supérieur de son logement 20 contre la face externe 7 de l'aile 2 de la plaquette, puis en le disposant verticalement comme représenté sur la figure 5 pour introduire entièrement la plaquette dans son logement 20.

On visse enfin la vis-pointeau 16 dans le trou taraudé 21 de l'objet 17 jusqu'à ce que son extrémité libre vienne prendre appui contre la partie intermédiaire 11 de la face externe 10 de l'aile 3 de la plaquette.

Il ressort de la description des différentes étapes décrites ci-dessus qu'aucun organe ne doit être implanté dans le mur 19 pour fixer l'objet 17 contre ce dernier.

Pour décrocher l'objet, on dévisse la vis-pointeau 16, on enlève l'objet de la plaquette 1, on chauffe cette dernière à une température de l'ordre de 120 à 140°C à l'aide d'un décapeur thermique ou autre afin de dégrader le mastic-colle, on soulève la plaquette 1 à l'aide d'un outil plat tel qu'une spatule, on enlève le mastic-colle dégradé à l'aide d'un chiffon ou autre moyen approprié, et on nettoie la surface du mur au niveau de laquelle était fixée la plaquette.

Aucune trace n'apparaît après le décrochage de l'objet, de sorte que le mur conserve son esthétique d'origine.

On précisera enfin que les dimensions de la plaquette sont adaptées à la taille de l'objet à fixer et que le volume et la profondeur du logement 5 sont déterminés en fonction du poids de l'objet à fixer, ainsi que des efforts que celui-ci aura à supporter lors de son utilisation.

## Revendications

1. Dispositif pour la fixation d'un objet (17) sur une surface (19), notamment sur un mur ou un plancher, comprenant premièrement une plaquette (1) comportant des ailes (2, 3) faisant saillie sur sa face interne (4) et destinées à être appliquées contre la surface (19) deuxièmement une quantité de colle (18) destinée à fixer les ailes (2, 3) de la plaquette (1) contre la surface (19), et troisièmement des moyens (16) pour fixer l'objet sur la plaquette, les ailes (2, 3) ayant la même hauteur et définissant avec la face interne (4) de la plaquette un logement (5) apte à recevoir une quantité de colle suffisante pour assurer, après polymérisation, une fixation solide, sur la surface, de la plaquette portant l'objet, **caractérisé en ce que** les ailes (2,3) sont situées uniquement au niveau de deux côtés opposés de la plaquette, **en ce que** l'une (2) des ailes possède une face interne (6) perpendiculaire à la plaquette (1) et une face externe (7) inclinée en direction de sa face interne, et **en ce que** la colle (18) est un mastic-colle thermodégradable.

2. Dispositif selon la revendication 1, **caractérisé en ce que** l'autre aile (3) possède une face interne (9) perpendiculaire à la plaquette (1) et une face externe (10) dont les parties terminales sont parallèles à la face interne (9) et dont la partie intermédiaire (11) est inclinée en direction de cette dernière.

3. Dispositif selon la revendication 1 ou 2, **caractérisé en ce que** la plaquette (1) comporte au moins un trou (13) dans sa partie située entre les ailes (2, 3), la partie terminale du trou (13) qui est située du côté de la face externe (14) de la plaquette étant évasée.

4. Dispositif selon l'une quelconque des revendications précédentes, **caractérisé en ce que** la face interne (4) de la plaquette porte au moins un téton (15) dont la longueur est inférieure ou égale à la hauteur des ailes (2, 3).

5. Combinaison du dispositif selon l'une quelconque des revendications précédentes et de l'objet destiné à être fixé à l'aide de ce dispositif, **caractérisée en ce que** l'objet à fixer (17) comporte sur sa face destinée à être appliquée contre la surface (19) un logement (20) dont le volume correspond au jeu de montage près à celui de la plaquette (1), tandis que les moyens de fixation (16) comprennent au moins une vis-pointeau destinée à être vissée dans un trou taraudé (21) ménagé dans l'objet (17) et dont l'extrémité libre est destinée à prendre appui contre la plaquette (1).

6. Combinaison selon la revendication 5, comprenant le dispositif selon la revendication 2 et, **caractérisée en ce que** le trou taraudé (21) est ménagé dans la partie de l'objet (17) qui est destinée à venir devant la partie intermédiaire inclinée (11) de la face externe (10) de l'autre aile (3).

## Claims

1. A device for fastening an object (17) onto a surface (19), especially onto a wall or a floor, comprising firstly a small plate (1) having legs (2, 3) protruding from the inner face (4) thereof for being applied against the surface (19), secondly a quantity of an adhesive (18) for fastening the legs (2, 3) of the plate (1) onto the surface (19), and thirdly means (16) for fastening the object onto the plate, the legs (2, 3) having the same height and forming with the plate inner face (4) a housing (5) capable of receiving a sufficient quantity of the adhesive for providing, after curing, a firm fastening of the object-carrying plate onto the surface, **characterized in that** the legs (2, 3) are located only on two opposite sides of the plate, **in that** one leg (2) has an inner face (6), which is perpendicular to the plate (1) and an outer face (7), which is sloped towards its inner face, and **in that** the adhesive (18) is a heat degradable adhesive mastic.

2. The device according to claim 1, **characterized in that** the other leg (3) has an inner face (9), which is perpendicular to the plate (1) and an outer face (10), the end portions of which are parallel to the inner face (9) and the intermediate portion (11) of which is sloped towards the latter.

3. The device according to claim 1 or 2, **characterized in that** the plate (1) comprises at least one hole (13) in the portion thereof that is located between the legs (2, 3), the end portion of the hole (13) which is located on the side of the plate outer face (14) being flared.

4. The device according to any of the preceding claims, **characterized in that** the plate inner face (4) is provided with at least one stud (15), the length of which is less than or equal to the height of the legs (2, 3).

5. A combination of the device according to any of the preceding claims with the object to be fastened using said device, **characterized in that** the object (17) to be fastened comprises on the face thereof which is to be applied against the surface (19) a housing (20) with a volume corresponding to that of the plate (1) except for the mounting allowance, and the fastening means (16) comprise at least one threaded pin provided to be screwed into a threaded hole (21) in the object (17) and having its free end arranged to bear on the plate (1).

6. The combination according to claim 5, comprising the device according to claim 2 and **characterized in that** the threaded hole (21) is formed in the portion of the object (17) which is to be placed in front of the sloped intermediate portion (11) of the outer face (10) of the other leg (3).

## Patentansprüche

1. Vorrichtung zur Befestigung eines Gegenstandes (17) an eine Oberfläche (19), insbesondere an eine Wand oder einen Boden, mit erstens einem Plättchen (1) mit auf dessen innerer Oberfläche (4) vorspringenden Schenkeln (2, 3) zur Anlage an die Oberfläche (19), zweitens einer Menge Klebstoff (18) zur Befestigung der Schenkel (2, 3) des Plättchens (1) gegen die Oberfläche (19), und drittens Mitteln (16) zur Befestigung des Gegenstandes an das Plättchen, wobei die Schenkel (2, 3) gleich hoch sind und mit der Innenfläche (4) des Plättchens eine Ausnehmung (5) bilden zur Aufnahme einer Menge Klebstoff, die ausreicht, um nach Polymerisation eine dauerhafte Befestigung des den Gegenstand tragenden Plättchens an der Oberfläche zu gewährleisten, **dadurch gekennzeichnet, daß** die Schenkel (2, 3) ausschließlich an zwei gegenüberliegenden Seiten des Plättchens angeordnet sind, daß der eine Schenkel (2) eine senkrecht zum Plättchen (1) angeordnete Innenfläche (6) und eine in Richtung der Innenfläche geneigte Außenfläche (7) aufweist, und daß der Klebstoff (18) ein warmabbaubarer Leimkitt ist.

2. Vorrichtung nach Anspruch 1, **dadurch gekennzeichnet, daß** der andere Schenkel (3) eine senkrecht zum Plättchen (1) angeordnete Innenfläche (9) aufweist sowie eine Außenfläche (10), deren Endteile parallel zur Innenfläche (9) verlaufen und deren Zwischenteil (11) in Richtung letzterer geneigt ist.

3. Vorrichtung nach Anspruch 1 oder 2, **dadurch gekennzeichnet, daß** das Plättchen (1) im zwischen den Schenkeln (2, 3) liegenden Teil mindestens eine Bohrung (13) aufweist, wobei das auf der Seite der Außenfläche (14) des Plättchens liegende Endteil der Bohrung (13) sich erweitert.

4. Vorrichtung nach einem der vorhergehenden Ansprüche, **dadurch gekennzeichnet, daß** die Innenfläche (4) des Plättchens mindestens einen Ansatz (15) aufweist, dessen Länge gleich oder kleiner als die Höhe der Schenkel (2, 3) ist.

5. Zusammensetzung aus der Vorrichtung nach einem der vorhergehenden Ansprüche und dem mit Hilfe dieser Vorrichtung zu befestigenden Gegenstand, **dadurch gekennzeichnet, daß** der zu befestigende Gegenstand (17) an seiner an die Fläche (19) anzulegenden Seite eine Aufnahme (20) aufweist, deren Volumen auf das Montagespiel genau dem Volumen des Plättchens (1) entspricht, während die Befestigungsmittel (16) mindestens eine Klemmschraube aufweisen, die in eine Gewindebohrung (21) im Gegenstand (17) zu befestigen ist und deren freies Ende sich am Plättchen (1) stützen soll.

6. Zusammensetzung nach Anspruch 5, mit der Vorrichtung nach Anspruch 2 und **dadurch gekennzeichnet, daß** die Gewindebohrung (21) in dem Teil des Gegenstandes (17) vorgesehen ist, das vor dem geneigten Zwischenteil (11) der Außenfläche (10) des anderen Schenkels (3) liegen soll.
